# EUROPÄISCHE PATENTSCHRIFT

(11) **EP 2 935 057 B1**
(45) Veröffentlichungstag und Bekanntmachung des Hinweises auf die Patenterteilung: **26.07.2017**
(21) Anmeldenummer: 13799533.8
(22) Anmeldetag: 03.12.2013
(51) Int. Cl.: B65G 53/56, F16K 27/04

(54) **WEICHE FÜR EINEN BETRIEBSSTOFF**
SWITCH FOR A FUEL
DISPOSITIF AIGUILLEUR POUR UNE SUBSTANCE

(30) Priorität: 20.12.2012 DE 102012224061
(43) Veröffentlichungstag der Anmeldung: 28.10.2015
(73) Patentinhaber: Henkel AG & Co. KGaA, 40589 Düsseldorf (DE)
(72) Erfinder: HENKE, Andreas, Hellwege 27367 (DE)
(86) Internationale Anmeldenummer: PCT/EP2013/075389
(87) Internationale Veröffentlichungsnummer: WO 2014/095350

(56) Entgegenhaltungen:
- WO-A1-2013/105021
- WO-A2-2005/108831
- AU-B2- 762 587
- DE-A1- 4 009 218
- JP-A- 2002 154 653

## Beschreibung

Die vorliegende Erfindung betrifft eine Weiche nach dem Oberbegriff des Anspruchs 1 für einen Betriebsstoff, insbesondere ein Schüttgut, insbesondere ein Granulat. Derartige Weichen kommen insbesondere in Form von Rohrweichen für Schüttgüter insbesondere in pneumatischen Förderanlagen zum Einsatz, und dienen dazu, entweder zwei oder mehrere Förderleitungen in eine Förderleitung oder umgekehrt zu überführen. Es gibt viele mögliche Konstruktionsprinzipien und Bauformen derartiger Weichen. Insbesondere sind im Stand der Technik Schiebe-, Schlauch-, Dreh- oder Rotationsweichen bekannt, die je nach Einsatzzweck Anwendung finden.

Beispielsweise offenbar die DE202012101232U1 eine Rohrschiebeweiche für ein Granulat mit einem Gehäuse, einem ersten, zweiten und dritten am Gehäuse ausgebildeten Stutzen, einem im Gehäuse hin und her beweglich geführten Ventilkörper, der in einer ersten Stellung den ersten Stutzen mit dem zweiten Stutzen und in einer zweiten Stellung den ersten Stutzen mit dem dritten Stutzen verbindet, wenigstens eine von dem Gehäuse und dem Ventilkörper begrenzte Druckkammer sowie eine Verdrehsicherung, die den Ventilkörper gegen Verdrehen um die Verschiebeachse sichert.

Ferner offenbart die DE1556320 eine Drehrohrweiche, zur wahlweisen Verbindung
eines ankommenden Rohres mit einem von mehreren abgehenden Rohren, mit einem Drehrohr, das mit seinem Abgangeende zur Verschwenkung um die Achse des ankommenden Rohres mit der Randzone eines Drehtellers verbunden ist und das für den Verstellvorgang von einer feststehenden, die Abgangsstutzen in kreisförmiger Anordnung tragenden Grundplatte abhebbar und hernach gegen dieselbe wieder anpressbar ist.

Weiter offenbar die DE1756198 eine Drehrohrweiche, bei welcher der das Drehrohr führende Drehteller für die Verschwenkbewegung von der die Abgangsstutzen haltenden Grundplatte abhebbar ist, wobei zwischen dem Drehteller und der Grundplatte eine Räumvorrichtung zum Entfernen der beim Abheben aus den Rohranschlußstellen austretenden Fördergutreste angeordnet ist.

Die DE8427126U1 offenbart wiederum eine Drehrohrweiche zur wahlweisen Verbindung eines ankommenden Rohres mit einem von mehreren abgehenden Rohren, mit einem drehbar um eine zentrale Mittelachse verschwenkbaren Träger für Abdichtbereiche, die zum Verschließen der unbenutzten Rohrabgänge ausgebildet sind, wobei der Träger mittels eines Stellmotors in Richtung der Mittelachse zum Anpressen der Abdichtbereiche an die benachbarten Mündungen der abgehenden Rohre und zum Abheben davon verfahrbar ist.

Ferner offenbart die WO2005/108831A2 eine Weiche für einen Betriebsstoff aufweisend eine Eingangsöffnung zur Zuführung des Betriebsstoffs und mehrere Ausgabeöffnungen zur Ausgabe des Betriebsstoffes. Zudem weist die Weiche ein Stellglied auf, um eine Verbindungsmöglichkeit zwischen der Eingangsöffnung und einer der Ausgangsöffnungen herzustellen.

Die DE4009218A1 wiederum offenbart eine Drehschieberweiche, mit einem in einem Gehäuse angeordneten, drehbar gelagerten, zylindrischen Drehküken mit einer geradlinigen Durchgangsbohrung zur Verbindung einer ersten und einer zweiten miteinander fluchtenden Anschlussleitung und zur Verbindung einer von der ersten Anschlussleitung winklig abzweigenden dritten Anschlussleitung am Drehschiebergehäuse.

Darüber hinaus offenbart die JP2002154653A eine Drehrohrweiche nach dem Oberbegriff des Anspruchs 1, aufweisend mehrere Eingangsöffnungen sowie mehrere Ausgabeöffnungen. Ferner beinhaltet die gezeigte Drehrohrweiche ein Stellglied, um eine Verbindungsmöglichkeit zwischen einer der Eingangsöffnungen und einer der Ausgangsöffnungen bereitzustellen.

Alle gezeigten Weichen haben einen mehr oder weniger komplexen Aufbau und können herstellungstechnisch anspruchsvoll sein. Insbesondere im Hinblick auf unterschiedliche Baugrößen können zudem Grenzen gesetzt sein.

Aufgabe der vorliegenden Erfindung ist es daher, eine verbesserte Weiche bereitzustellen.

Diese Aufgabe wird durch die Merkmale des Anspruchs eins gelöst.

Vorteilhafte Weiterbildungen der vorliegenden Erfindung sind mit den Unteransprüchen angegeben.

Grundgedanke der Erfindung ist der Einsatz einer Weiche für einen Betriebsstoff aufweisend eine Eingangsöffnung zur Zuführung eines Betriebsstoff an einer Eingangsseite und mehrere Ausgabeöffnungen zur Ausgabe des Betriebsstoffes an einer Ausgangsseite, wobei zwischen der Eingabeseite und der Ausgangsseite ein Stellglied aufweisend einen Verbindungskanal vorgesehen ist, welches drehbar um eine Drehachse ist und derart derart verstellbar ist, dass über den Verbindungskanal eine Verbindungsmöglichkeit der Eingangsöffnung mit einem der Ausgabeöffnungen bereitstellbar ist, insbesondere um den Betriebsstoff von Eingangsöffnung zu der oder den gewählten Ausgangsöffnungen zu transportieren, wobei das Stellglied aus zumindest zwei Teilen besteht, wobei der Verbindungskanal vollständig im Bereich der Grenzfläche vom ersten Teil zum zweiten Teil angeordnet ist, und , durch beide oder alle Teile des Stellgliedes, insbesondere eine oder mehrere den Verbindungskanal begrenzende Wände oder Wandungen, definiert wird.

Gleichwohl kann selbstverständlich die Weiche derart ausgestaltet sein, dass beispielsweise ein Abzweig vorgesehen ist, so dass die Eingangsöffnung mit jeweils zwei oder mehreren Ausgangsöffnungen verbindbar ist. Auch können mehrere Eingangsöffnungen vorgesehen werden, die mit unterschiedlichen Ausgangsöffnungen verbindbar sind. In einer Ausgestaltung ist zudem vorgesehen, die Weiche umgekehrt zu nutzen, so dass die besagte Eingangsöffnung als Ausgang für den Betriebsstoff und die besagten Ausgangsöffnungen als Eingang für den Betriebsstoff genutzt werden.

Als Betriebsstoff kann insbesondere ein schüttfähiger Betriebsstoff, wie beispielsweise ein Granulat zum Einsatz kommen. Insbesondere kann unter einem Granulat ein körniger bis pulverförmiger, insbesondere leicht schüttbarer Feststoff verstanden werden. In einer alternativen Ausführungsform können jedoch optional auch allgemein pumpfähige Betriebsstoffe befördert werden, die sich mit einem gasförmigen Transportmedium mischen lassen. Besonders vorteilhaft hat sich jedoch der Einsatz eines Betriebsstoffes in Granulatform erwiesen, da ein Granulat einfach mittels eines gasförmigen Transportmediums beförderbar ist. Beispielsweise kommt hierbei ein Schmelzklebstoff in Granulatform zum Einsatz, der insbesondere in der Verpackungstechnik zur Herstellung von Kartonagen oder ähnlichen Verpackungsmaterialien zur Anwendung kommt. Derartige Granulate werden meist in großen Vorratsspeichern oder Vorratstanks gelagert und zur Weiterverarbeitung an unterschiedliche Verarbeitungsstationen zugeführt. Durch den Einsatz einer erfindungsgemäßen Weiche können beispielsweise mit einem Vorratsspeicher eine Vielzahl von Verarbeitungsstationen mit dem Granulat versorgt werden, indem der eine vom Vorratsspeicher gespeiste Zuführleitung an die Eingangsöffnung der Weiche angeschlossen wird, an die Ausgangsöffnungen jeweils wiederum an entsprechende Verarbeitungsstationen angeschlossenen Beschickungsleitungen. Durch Einsatz einer elektronischen Steuerung, die Teil der Weiche sein kann, kann das oben genannte Stellglied derart eingestellt werden, dass eine Beschickung einer bestimmten Verarbeitungsstation mit dem Betriebsstoff möglich ist.

Das den Verbindungskanal aufweisende Stellglied ist dabei hinsichtlich der besagten Öffnungen derart verdrehbar, dass der der Eingangsseite zugewandte Bereich des Verbindungskanals mit der Eingangsöffnung und der gegenüberliegende, der Ausgangsseite zugewandte Bereich des Verbindungskanals mit einer je nach Verstellung des Stellgliedes gewählten Ausgangsöffnung in Verbindung gebracht werden kann, so dass mittels des Verbindungskanals eine Kommunikationsmöglichkeit zum Transport des Betriebsstoffes von der Eingangsöffnung zu einer oder mehreren der Ausgangsöffnungen ermöglichbar ist. Erfindungsgemäß ist das Stellglied dabei aus zumindest zwei Teilen zusammengesetzt, wobei der Verbindungskanal zumindest bereichsweise, insbesondere zumindest eine oder mehrere den Verbindungskanal begrenzende Wände oder Wandungen, durch beide Teile des Stellgliedes definiert wird. Diese Gestaltung kann in vielerlei Hinsicht vorteilhaft sein. Erfindungsgemäß ist eine vollständige Anordnung des Verbindungskanals im Bereich der Grenzfläche vorgesehen, also der Kontaktfläche vom ersten Teil zum zweiten Teil. Vorzugsweise wird der Verbindungskanal dabei erst durch Zusammensetzen der beiden oder mehreren Teile gebildet. So kann der Verbindungskanal beispielsweise durch Ausnehmungen in einem oder mehreren Teilen gebildet werden oder durch eine oder mehrere Ausnehmungen in einem ersten Teil sowie einem korrespondierenden Wandabschnitt eines zweiten Teiles, der eine Wandung des Verbindungskanals im zusammengebauten Zustand des Stellglieds bereitstellt. Insbesondere kann die Fertigung des Stellglieds ermöglicht werden, da durch die oberhalb beschriebene mehrteilige Gestaltung des Stellgliedes eine Ausgestaltung des Verbindungskanals durch Nutzung mehrerer der Teile möglich ist. Insbesondere können die Teile des Stellgliedes dabei aus einem Vollmaterial, wie beispielsweise einem metallischen Werkstoff oder einem Kunststoffwerkstoff bestehen, wobei zumindest in eines der Teile zumindest Abschnittsweise ein oder mehrere Ausnehmungen vorgesehen sind, die den Verbindungskanal definieren. Eine geeignete Aufteilung des Stellgliedes in einzelne Teile ermöglicht dabei eine Bereitstellung des Verbindungskanals, wobei im Hinblick auf die oben genannte Kontaktfläche oder Kontaktflächen Hinterschnitte bei der Gestaltung besagter Ausnehmungen vermieden werden können, was zu einer vereinfachten Herstellung, Bearbeitung und Wartung des Stellgliedes führen kann. Die Ausnehmungen können dabei durch sich eignende Fertigungsverfahren in die Teile eingebracht werden. So können die Ausnehmungen aufweisenden Teile mit selbigen bereits im Urformverfahren ausgestattet werden. Insbesondere sind hier je nach Werkstoff des Teiles und/oder des Stellgliedes sich eignende und dem Fachmann bekannte Urformverfahren denkbar, insbesondere gießen von metallischen Werkstoffen oder Spritzgießen von Kunststoffwerkstoffen. Alternativ hierzu können die Ausnehmungen natürlich auch durch ein Bearbeitungsverfahren in eines oder mehrere Teile eingebracht werden, bei denen der Material in die gewünschte Form gebracht wird, wobei überflüssiges Material in Form abgetragen wird. Hier ist als mechanisches Bearbeitungsverfahren insbesondere das Zerspanen denkbar. Selbstverständlich eignen sich auch hier andere dem Fachmann bekannte Bearbeitungsverfahren.

In einer vorteilhaften Weiterbildung ist der Verbindungskanal daher durch zumindest eine Aussparung in einem der Teile des Stellgliedes definiert. Besagte Aussparung kann insbesondere wie oberhalb beschrieben gestaltet und hergestellt worden sein.

In einer vorteilhaften Weiterbildung ist der Verbindungskanal zumindest abschnittsweise durch Aussparungen in zwei angrenzenden Teilen des Stellgliedes definiert, welche im montierten Zustand der Teile vorzugsweise einander gegenüberliegen und so den Kanal bilden.

Ein weiterer Vorteil ist dabei die zumindest bereichsweise spiegelsymmetrisch Ausbildung der Aussparungen in beiden angrenzenden Teilen.

In einer vorteilhaften Weiterbildung erstreckt sich eine Aussparungen eines ersten Teils von dessen Kontaktoberfläche mit einem angrenzenden zweiten Teil in eine Erstreckungsrichtung in das erste Teil, wobei das lichte Maß der Aussparung von der Oberfläche in Erstreckungsrichtung konstant ist oder kleiner wird, insbesondere um Hinterschnitte zu vermeiden und damit eine einfache Herstellung zu gewährleisten.

Erfindungsgemäß ist vorgesehen, dass das Stellglied drehbar um eine Drehachse ist. Eine vorteilhafte Weiterbildung der Erfindung sieht vor, dass die Drehachse durch die Eingangsöffnung, besonders bevorzugt koaxial hinsichtlich der vorzugsweise runden oder zylindrischen Eingangsöffnung verläuft, wobei der Verbindungskanal zumindest an seiner der Eingangsseite zugewandten Seite mit der Eingangsöffnung fluchtet. Bevorzugt ist der Verbindungskanal an seiner der Eingangsseite zugewandten Seite mit einer hinsichtlich der Eingangsöffnung korrespondierenden Form gestaltet. Weist die Eingangsöffnung demnach einen kreisrunden Querschnitt auf, ist die Form des Verbindungskanals in diesem Bereich vorzugsweise auch kreisrund. Mit einer solchen Gestaltung kann beispielsweise eine derartige Weiche bereitgestellt werden, bei dem das Stellglied einerseits um die Drehachse verdrehbar ist. Andererseits, insbesondere bei der Wahl eines kreisrunden Eingangsöffnung auch um die Eingangsöffnung, wobei bei einer entsprechenden vorzugsweise kreisrunden Ausbildung des an die Eingangsöffnung angrenzenden Abschnitts des Verbindungskanals, welcher mit der Eingangsöffnung fluchtet gleichsam eine Verdrehung des Stellgliedes um die Eingangsöffnung und um den besagten Abschnitt des Verbindungskanals.

Ein weiterer Vorteil ist die Gestaltung des Stellgliedes derart, dass die Kontaktoberfläche parallel zu der Drehachse verläuft. Dabei hat es sich als vorteilhaft erwiesen, dass die Kontaktoberfläche als Ebene ausgebildet ist oder zumindest bereichsweise eine gerade Oberfläche hat. Dabei kann es denkbar sein, dass die Drehachse sich über besagte Kontaktoberfläche erstreckt, also in der Kontaktoberfläche liegt. In einer Variante kann es sich als zweckdienlich erweisen, dass die Drehachse beabstandet von der Kontaktoberfläche, jedoch parallel zu selbiger verläuft.

In einer vorteilhaften Weiterbildung ist erstreckt sich die Drehachse durch die Öffnung des Verbindungskanals an seiner hinsichtlich der Eingangsseite zugewandten Seite des Stellgliedes. Bei einer runden oder ovalen Gestaltung des Verbindungskanals kann dis insbesondere der Mittelpunkt sein.

Ein weiterer Vorteil ist die Gestaltung des Verbindungskanals derart, dass sich selbiger durch von der hinsichtlich der Eingangsseite zugewandten Seite des Stellgliedes zur seiner gegenüberliegenden, der Ausgangsseite zugewandten Seite des Stellgliedes derart durch das Stellglied erstreckt, dass der Abstand des Verbindungskanals zur Drehachse in dieser Richtung zumindest bereichsweise zunimmt. Bevorzugt verringert sich der Abstand in dieser besagten Erstreckungsrichtung nicht mehr. Besonders bevorzugt verläuft der Verbindungskanal derart durch das Stellglied, dass lediglich weiche Rundungen und keine scharfen Ecken oder Kanten vorgesehen sind, um Hindernisse zu vermeiden und so den Widerstand für den zu befördernden Betriebsstoff zu minimieren.

In einer vorteilhaften Weiterbildung weist das Stellglied der Weiche zumindest einen Druckmediumkanal, insbesondere einen Druckluftkanal auf, der über eine Kanalmündung in den Verbindungskanal mündet, um ein gasförmiges Druckmedium, insbesondere Druckluft in den Verbindungskanal zuführen zu können. Alternativ ist es möglich einen solchen Kanal vorzusehen, um den Verbindungskanal insbesondere mit einem flüssigen Medium insbesondere zur Reinigung zu beaufschlagen. Der Druckmediumkanal kann dabei wieder zumindest bereichsweise durch die Teile des Stellgliedes definiert werden. Die diesbezüglich den Verbindungskanal betreffenden Gestaltungsmerkmale sind insoweit auf den hier beschriebenen Druckmediumkanal anzuwenden.

Die Erfindung ist mit den angehängten Zeichnungen beispielhaft dargestellt. Darin zeigt
- Figur 1: eine geschnittene Seitenansicht einer erfindungsgemäßen Weiche,
- Figur 2: eine Schnittansicht durch die Schnittlinie A-A der Weiche aus Figur 1
- Figur 3: eine Vorderansicht der Weiche aus Figur 1,
- Figur 4: eine Schnittansicht durch die Schnittlinie B-B der Weiche aus Figur 3,
- Figur 5: eine Vorderansicht einer alternativen Weiche.

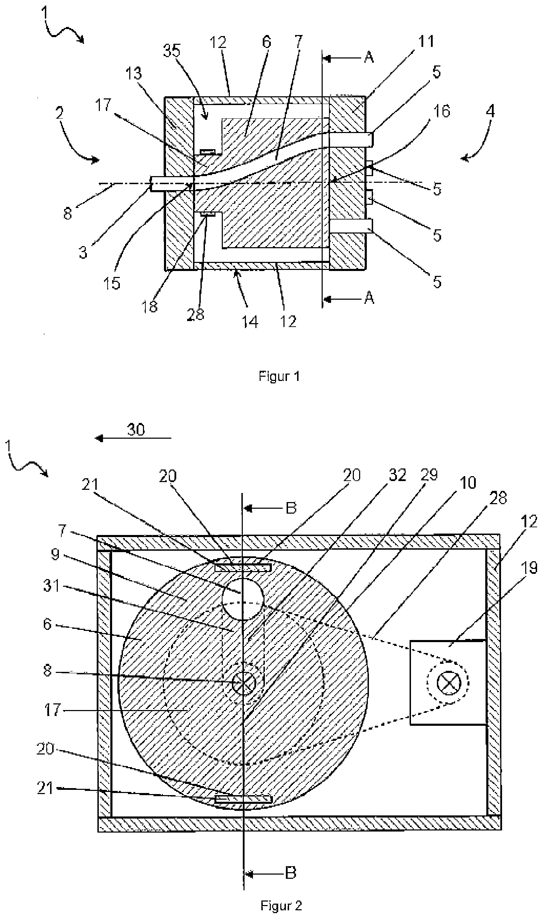

Figur 1 zeigt eine schematische, geschnittene Seitenansicht einer erfindungsgemäßen Weiche 1 für einen Betriebsstoff. Der besseren Übersicht halber sind nur die Wesentlicheren Merkmale der Weiche 1 dargestellt. Insbesondere Dichtungen, Lager und ähnliche Bauelemente sind nicht dargestellt. Eine derartige Weiche 1 kommt im gezeigten Ausführungsbeispiel in einer pneumatischen Förderanlage zum Einsatz, und dient dazu, eine erste Förderleitung in eine zweite Förderleitung zu überführen, wobei die zweite Förderleitung aus verschiedenen Förderleitungen auswählbar ist. Die pneumatische Förderanlage umfasst einen nicht gezeigten Vorratsbehälter für einen Schmelzklebstoff in Granulatform, eine nicht abgebildete Füllvorrichtung zum Befördern des Granulats mittels Druckluft. Die Weiche 1 ist über eine Förderleitung an die Füllvorrichtung angeschlossen, so dass mittels einer Füllvorrichtung und einer Weiche 1 eine Vielzahl von an die Weiche 1 angeschlossene nicht gezeigte Auftragseinheiten zum Aufschmelzen und Auftragen des Schmelzklebstoffes versorgt werden können.

Die von der Füllvorrichtung kommende Förderleitung ist dabei an eine Eingangsöffnung 3 an einer Eingangsseite 2 der Weiche 1 angeschlossen. Die Eingangsöffnung 3 ist an einer Rückplatte 13 eines Gehäuses 14 der Weiche 1 vorgesehen und weist übliche Verbindungselemente für die Förderleitung, beispielsweise eine Schlauchkupplung auf. Des Weiteren umfasst besagtes Gehäuse 14 Seitenplatten 12, welche mit der Rückplatte 13 verbunden sind. An einer der Rückplatte 13 und somit der Eingangsseite 2 gegenüberliegenden Ausgangsseite 4 ist eine Frontplatte 11 vorgesehen, die eine Vielzahl von Ausgangsöffnungen 5 aufweist. In der gezeigten Schnittansicht sind 4 Ausgangsöffnungen 5 zu erkennen. Die gesamte Weiche 1 weist im gezeigten Ausführungsbeispiel sechs Ausgangsöffnungen 5 auf. An jeder Ausgangsöffnung 5 ist über eine nicht gezeigte Förderleitung jeweils eine besagte Auftragseinheit angeschlossen. Hierzu weisen die Ausgangsöffnungen 5 übliche Verbindungselemente für die Förderleitungen, beispielsweise Schlauchkupplungen auf. Die Eingangsöffnung 3 weist einen kreisförmigen Querschnitt auf, wobei sich zudem ein hohlzylindrischer Kanal von der Eingangsöffnung 3 durch die Rückplatte 13 in Richtung der Frontplatte 11 erstreckt. Die Ausgangsöffnungen 5 weisen ebenfalls kreisförmigen Querschnitt auf, wobei sich auch hier an selbige jeweils durch die Fronplatte 11 in Richtung der Rückplatte 13 erstreckende hohlzylindrische Kanäle anschließen.

Das Gehäuse 14 umschließt mit den Seitenplatten 12 und der Rückplatte 13 sowie der Frontplatte 11 einen Hohlraum 35, in dem ein drehbar um eine Drehachse 8 gelagertes Stellglied 6 vorgesehen ist. Die Drehachse 8 erstreckt sich dabei durch den Mittelpunkt der Eingangsöffnung 3 und verläuft orthogonal zur Rückplatte 13 und zur gegenüberliegenden Frontplatte 11. Die kreisförmigen Ausgangsöffnungen 5 sind liegen dabei in einer Ebene radial im selben Abstand um von der Drehachse 8 entfernt und sind in regelmäßigen Abständen zueinander um die Drehachse 8 herum angeordnet. Mit der Rückplatte 13 ist das Stellglied 6 über ein hinteres Drehlager 15, mit der Frontplatte 11 über ein vorderes Drehlager 16 drehbar verbunden und so um die Drehachse 8 relativ zum Gehäuse 14 drehbar. Das Stellglied 6 weist einen Kanal 7 auf, welcher sich von dem an die Rückplatte 13 grenzenden hinteren Bereich des Stellglieds 6 durch selbiges bis zum gegenüberliegenden an die Frontplatte 11 grenzenden vorderen Bereich des Stellgliedes 6 erstreckt. Der ist dabei hohl und weist einen kreisförmigen Querschnitt auf, wobei der Querschnitt dem der Eingangsöffnung 3 und der Ausgangsöffnung 5 entspricht. An der hinteren Seite ist der Kanal 7 am Übergang zur Rückplatte 13 derart angeordnet, dass sich die Drehachse 8 durch den Mittelpunkt des kreisförmigen Querschnitts des Kanals 7 erstreckt. Der Kanal 7 ist somit am besagten Übergang konzentrisch zur Eingangsöffnung 3 vorgesehen, so dass ein durch die Eingangsöffnung 3 eingebrachtes Granulat durch selbige ungehindert in den Kanal 7 gelangen kann. In Richtung der Ausgangsseite 4 verläuft der Kanal 7 zumindest bereichsweise kurvig oder abgewinkelt, so dass der Abstand des Kanals 7, im gezeigten Ausführungsbeispiel genauer gesagt der Abstand des Mittelspunktes des kreisförmigen Querschnittes des Kanals 7, von der Drehachse 8 von der Eingangsseite 3 in Richtung der Ausgangsseite 4 zunimmt. In der gezeigten Schnittansicht erstreckt sich der Kanal in Form eines in die Länge gezogenen S von der Eingangsseite 3 in Richtung der Ausgangsseite 4. Der Verlauf des Kanals 7 ist derart eingestellt, dass selbiger am Übergang des Stellgliedes 6 zur Frontplatte 11 durch Drehung des Stellgliedes 6 um die Drehachse 8 derart konzentrisch zu einer der Ausgangsöffnungen 5 ausgerichtet werden kann, dass ein durch die Eingangsöffnung 3 eingebrachtes Granulat durch selbige ungehindert in den Kanal 7 und dann durch die gewählte Ausgangsöffnung 5 zur Versorgung einer Auftragseinheit gelangen kann. Durch weitere Drehung des Stellgliedes 6 kann sodann der Kanal 7 hinsichtlich einer weiteren Eingangsöffnung 3 ausgerichtet werden, um einen abweichenden Weg für das eingebrachte Granulat bereitzustellen und eine weitere Auftragseinheit zu versorgen. Die Drehung des Stellgliedes 6 erfolgt mittels eines Zahnriemens 28, welcher mit einer umlaufenden Verzahnung 18 an einem Antriebsabschnitt 17 am hinteren Bereich des Stellgliedes 6 angreift und über einen nicht dargestellten Motor antreibbar ist.

Figur 2 zeigt eine Schnittansicht durch die Schnittlinie A-A der Weiche 1 aus Figur 1. Zur erkennen ist ein an einer Seitenplatte 12 montierter Antriebsmotor 19, der eine parallel zur Drehachse 8 rotierende Antriebswelle aufweist, über die das Stellglied 6 mittels des Zahnriemens 28 um die Drehachse 8 drehbar ist, um über den Kanal 7 eine Verbindungsmöglichkeit der oberhalb beschriebenen Eingangsöffnung 3 mit einem der beschriebenen Ausgabeöffnungen 5 bereitstellen zu können. Wie oberhalb angesprochen greift der Zahnriemen 28 dabei an einen Antriebsabschnitt 17 im hinteren Bereich des Stellgliedes 6 an. Das Stellglied 6 ist in der Grundform zylindrisch gestaltet, wobei zu dieser Grundform zusätzlich besagter Antriebsabschnitt 17 sowie Teile der besagten Drehlager 15, 16 hinzukommen. Dabei besteht das Stellglied aus zwei Teilen, nämlich einer ersten Hälfte 9 und einer zweiten Hälfte 10, wobei der Kanal 7 durch beide Teilen 9, 10 definiert wird.

Das Stellglied 6 wird durch eine Schnittebene 29 in die erste Hälfte 9 und die zweite Hälfte 10 unterteilt, wobei die Schnittebene 29 gleichzeitig eine Symmetrieebene für die beiden spiegelsymmetrisch zueinander ausgebildeten Hälften 9, 10 bildet. Im gezeigten Ausführungsbeispiel verläuft die Drehachse 8 nicht nur parallel zur Schnittebene 29, sondern liegt vielmehr in der Schnittebene 29. Ferner trennt die Schnittebene 29 den Kanal 7 in zwei gleiche, spiegelsymmetrisch um die Schnittebene 29 angeordnete Hälften, nämlich eine erste Aussparung 31 in der ersten Hälfte 9 und eine korrespondierende zweite Aussparung 32 in der zweiten Hälfte 10, wobei beide Aussparungen 31, 32 im zusammengebauten Zustand der Hälften 9, 10 den Kanal 7 bilden. Die Aussparungen 31, 32 sind derart gestaltet, dass auf Hinterschnitte in einem der Hälften 9, 10 verzichtet werden kann. So erstreckt sich die erste Aussparung 31 von der an der Schnittebene 29 vorgesehenen Oberfläche der ersten Hälfte 9 derart in eine Erstreckungsrichtung 30 in die erste Hälfte 9, dass das lichte Maß der Aussparung 31 von besagter Oberfläche in Erstreckungsrichtung 30 konstant ist oder kleiner wird. Gleiches gilt entsprechend für die korrespondierende zweite Ausnehmung 32 in der zweiten Hälfte 10.

Die beiden Hälften 9, 10 weisen Bohrungen 20 auf, die sich von den jeweils an der Schnittebene 29 vorgesehenen Oberflächen orthogonal zu der jeweiligen Oberfläche in die entsprechende Hälfte 9, 10 erstrecken. Dabei ist jeder Bohrung 20 der einen Hälfte 9 eine entsprechende Bohrung 20 an der zweiten Hälfte 10 zugeordnet, so dass mittels Montagestifte 21, welche sich jeweils über zwei miteinander korrespondierende Borungen 20 beider Hälften 9, 10 erstrecken, eine Fixierung der beiden Hälften 9, 10 zur Bereitstellung des Stellgliedes 7 und so des geschlossenen Kanals 7 durch die erste Ausnehmung 31 und die zweite Ausnehmung 32 ermöglicht werden kann.

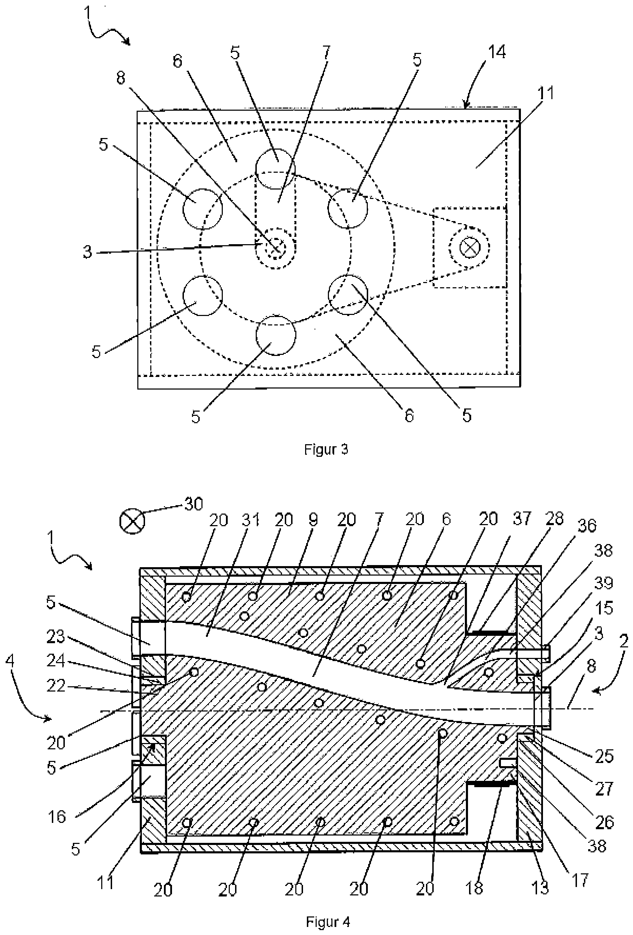

Figur 3 zeigt eine Vorderansicht der Weiche 1 aus Figur 1. Zu erkennen ist die Frontplatte 11 mit den sechs kreisförmigen Ausgangsöffnungen 5, welche in regelmäßigen Abständen zueinander sowie radial im selben Abstand von der Drehachse 8 entfernt um die Drehachse 8 herum angeordnet sind. In gestrichelten Linien ist der sich von der zentrischen Eingangsöffnung 3 schräg durch das Stellglied 6 erstreckende Kanal 7 zu erkennen, welche eine Kommunikationsmöglichkeit zwischen der Eingangsöffnung 3 und der im gezeigten Ausführungsbeispiel obersten Ausgangsöffnung 5 ermöglicht.

Figur 4 zeigt eine Schnittansicht durch die Schnittlinie B-B der Weiche 1 aus Figur 2 auf die der Schnittebene 29 zugewandten Oberfläche oder Grenzfläche der ersten Hälfte 9 des Stellgliedes 6. Zur erkennen ist hier die Aussparung 31 der ersten Hälfte, welche teilweise den Kanal 7 definiert. Dabei erstreckt sich das wobei das lichte Maß der Aussparung 31 von der besagten Oberfläche in Erstreckungsrichtung 30 konstant ist oder kleiner wird, um Hinterschnitte in der ersten Hälfte 9 zu vermeiden und eine einfache Herstellung zu gewährleisten. Die Aussparung 31 und somit auch der Kanal 7 fluchtet an der Eingangsseite 2 mit der Eingangsöffnung 3, durch welche die Drehachse 8 des Stellgliedes 6 verläuft. Ferner erstreckt sich die Aussparung 31 durch die erste Hälfte 9, und somit auch der Kanal 7 durch das Stellglied 6, von der Eingangsseite 2 zur Ausgangsseite 4 derart, dass der Abstand zu der Drehachse 8 kontinuierlich zunimmt, so dass der Kanal 7 am vorderen Bereich des Stellgliedes mit einem der radial von der Drehachse 8 beabstandet angeordneten Ausgangsöffnungen 5 in Eingriff gebracht werden kann, um über den Kanal 7 eine Kommunikationsmöglichkeit zwischen Eingangsöffnung 3 und einer gewählten Ausgangsöffnung 5 zu ermöglichen. Zur Bereitstellung des Stellgliedes 6 ist die erste Hälfte 9 mit einer Vielzahl von Bohrungen 20 ausgestattet die zur Aufnahme von oberhalb beschriebenen Montagestiften 21 dient, welche wiederum in korrespondierende Bohrungen 20 der zweiten Hälfte 10 eingreifen. Dabei ist zu beobachten, dass eine Vielzahl von Bohrungen 20 an den Randbereichen der ersten Hälfte 9 vorgesehen sind, zudem jedoch auch eine Vielzahl von Bohrungen 20 dem Verlauf der ersten Aussparung 31 folgend in der ersten Hälfte 9 vorgesehen sind. Entsprechendes gilt selbstverständlich für die nicht gezeigte zweite Hälfte 10.

Die drehbare Lagerung des Stellgliedes 6 um die Drehachse 8 erfolgt wie oberhalb beschrieben über ein vorderes Lager 16 und ein hinteres Lager 15. Das vordere Lager 16 umfasst eine zentrische Lageraufnahme 23 an der Frontplatte 11 aufweisend ein Kugellager 24, welches mit einem zapfenförmig vorstehenden vorderen Lagerabschnitt 22 des Stellgliedes 6 in Eingriff steht. Das hintere Lager 15 wiederum umfasst eine zentrische Lageraufnahme 26 an der Rückplatte 13 aufweisend ein Kugellager 27, welches mit einem zapfenförmig vorstehenden hinteren Lagerabschnitt 25 des Stellgliedes 6 in Eingriff steht. Angrenzend an die Rückplatte 13 weist das Stellglied 6 zudem den Antriebsabschnitt 17 mit der umlaufenden Verzahnung 18 auf, die eine Eingriffsmöglichkeit für den bereits beschriebenen Zahnriemen 28 bereitstellt.

Zur Optimierung der Beförderung des Granulats innerhalb des Kanals 7 ist ferner im hinteren Bereich des Stellgliedes 6 ein sich durch den Antriebsabschnitt 17 erstreckender Druckluftkanal 36 vorgesehen, der mit einer Kanalmündung 37 in dem Kanal 7 mündet. Über den Druckluftkanal 36 kann Druckluft in den Kanal 7 eingeblasen werden, um das Granulat besser in Richtung Ausgangsöffnung 5 befördern zu können oder um den Kanal 7 gegebenenfalls reinigen zu können. An der der Rückplatte 13 zugewandten Seite des Stellgliedes 6 weist selbiges einen radial um die Drehachse 8 umlaufenden Druckluftanschlussspalt 38 auf, der mit in den Druckluftkanal 36 mündet. Zur Beaufschlagung des Druckluftanschlussspaltes 38 und somit des Druckluftkanals 36 mit Druckluft weist die Rückplatte 13 am entsprechenden Niveau des Druckluftanschlussspaltes 38 einen Drucklufteingang 39 aufweisend ein Anschlussventil auf. Durch den Einsatz eines umlaufenden Druckluftanschlussspaltes 38 kann der Druckluftkanal 36 mit Druckluft versorgt werden, ganz gleich in welcher Lage das Stellglied 6 um die Drehachse 8 herum verdreht worden ist. Alternativ ist es auch möglich eine Vielzahl von Druckluftanschlussmöglichkeiten an der der Rückplatte 13 zugewandten Seite des Stellgliedes 6 vorzusehen, die beispielsweise jeweils mit einem oberhalb beschriebenen Druckluftkanal 36 in den Kanal 7 münden können. Die Druckluftanschlussmöglichkeiten entsprechen zahlenmäßig vorzugsweise der Anzahl der Ausgangsöffnungen 5 der Weiche 1 und sind vorzugsweise derart um die Drehachse 8 herum angeordnet, dass eine Druckluftanschlussmöglichkeit mit dem Drucklufteingang 39 in Eingriff steht, wenn der Kanal 7 mit einer der Ausgangsöffnungen 5 in Eingriff steht.

Zudem weist die gezeigte Weiche 1 an ihrer vorderen, der Frontplatte 11 zugewandten Seite ein Dichtmittel auf, um eine dichte Anbindung des Kanals 7 an eine der Ausgangsöffnungen 5 ermöglichen zu können. Dieses Dichtmittel kann insbesondere durch eine nicht abgebildete Dichtplatte zwischen dem Stellglied 6 und der Frontplatte 11 realisiert werden, die nach dem Erreichen einer gewünschten Position des Stellgliedes 6 durch einen Servomotor mittels einer Gewindestange an das Stellglied gepresst wird. Die Dichtplatte weist dabei vorzugsweise eine hinsichtlich des Kanals 7 und der Ausgangsöffnung 5 korrespondierende Bohrung auf und dichtet so den Übergang zwischen Stellglied 6 und Frontplatte 11 ab. Weitere sich eignende Dichtmittel für die erfindungsgemäße Weiche 1 sind beispielsweise der DE1556320B1 zu entnehmen, deren diesbezügliche Merkmale insoweit die vorliegende Offenbarung ergänzt.

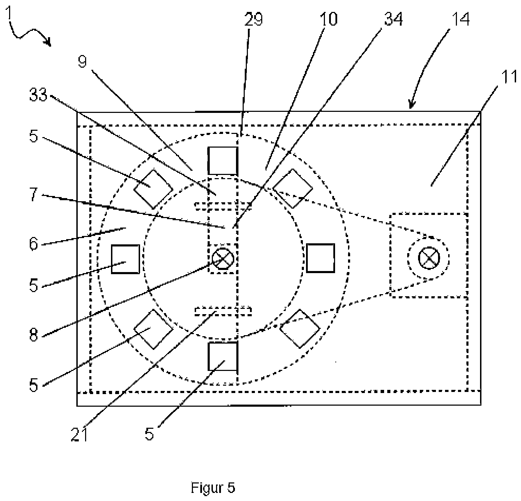

Figur 5 zeigt eine Vorderansicht einer alternativen Weiche 1, die im Wesentlichen der Weiche 1 aus den Figuren 1 bis 4 entspricht. Jedoch unterscheidet sich die hier gezeigte Weiche einerseits durch den Einsatz einer quadratischen Eingangsöffnung 3 sowie einen Kanal 7 mit entsprechend quadratischem Querschnitt. Zudem sind an der abgebildeten Frontplatte 11 acht Ausgangsöffnungen 5 vorgesehen, welche ebenfalls einen quadratischen Querschnitt aufweisen und in regelmäßigen Abständen zueinander sowie radial im selben Abstand von der Drehachse 8 entfernt um die Drehachse 8 herum angeordnet sind.

Ferner sind die Hälften 9, 10 des Stellgliedes 6 nicht spiegelsymmetrisch um die Schnittebene 29 gestaltet. Vielmehr weist lediglich die erste Hälfte eine Ausnehmung 33 zur Bereitstellung des Kanals 7 auf, wobei Oberfläche oder Grenzfläche der zweiten Hälfte 10, die in der Schnittebene 29 liegt, eine Wandung oder Begrenzungsfläche 34 des Kanals 7 bildet.

Selbstverständlich ist es zudem möglich, dass das Stellglied 6 in weitere Teile unterteilt wird. Zudem ist es auch möglich, den Kanal 7 nur bereichsweise durch beide Hälften 9, 10 zu definieren oder zu bilden. Vielmehr ist es insbesondere denkbar, dass der Kanal 7 bereichsweise durch lediglich einen Teil des Stellgliedes 6 gebildet wird. So kann der Kanal 7 dabei insbesondere teilweise als Bohrung eines Teils des Stellgliedes 6 ausgebildet sein.

**Bezugszeichenliste**

| | | | |
|---|---|---|---|
| 1 | Weiche | 21 | Montagestift |
| 2 | Eingangsseite | 22 | Vorderer Lagerabschnitt |
| 3 | Eingangsöffnung | 23 | Vordere Lageraufnahme |
| 4 | Ausgangsseite | 24 | Kugellager |
| 5 | Ausgangsöffnung | 25 | Hinterer Lagerabschnitt |
| 6 | Stellglied | 26 | Hintere Lageraufnahme |
| 7 | Kanal | 27 | Kugellager |
| 8 | Drehachse | 28 | Zahnriemen |
| 9 | Erste Hälfte | 29 | Schnittebene |
| 10 | Zweite Hälfte | 30 | Erstreckungsrichtung |
| 11 | Frontplatte | 31 | Erste Aussparung |
| 12 | Seitenplatte | 32 | zweite Aussparung |
| 13 | Rückplatte | 33 | Einfache Aussparung |
| 14 | Gehäuse | 34 | Begrenzungsfläche |
| 15 | Hinteres Drehlager | 35 | Hohlraum |
| 16 | Vorderes Drehlager | 36 | Druckluftkanal |
| 17 | Antriebsabschnitt | 37 | Kanalmündung |
| 18 | Verzahnung | 38 | Druckluftanschlussspalt |
| 19 | Antriebsmotor | 39 | Drucklufteingang |
| 20 | Bohrung | | |

## Patentansprüche

1. Weiche (1) für einen Betriebsstoff aufweisend eine Eingangsöffnung (3) zur Zuführung eines Betriebsstoffes an einer Eingangsseite (2) und mehrere Ausgabeöffnungen (5) zur Ausgabe des Betriebsstoffes an einer Ausgangsseite (4), wobei zwischen der Eingangsseite (2) und der Ausgangsseite (4) ein Stellglied (6) aufweisend einen Verbindungskanal (7) vorgesehen ist, welches drehbar um eine Drehachse (8) ist und derart verstellbar ist, dass über den Verbindungskanal (7) eine Verbindungsmöglichkeit der Eingangsöffnung (3) mit einer der Ausgabeöffnungen (5) bereitstellbar ist, wobei das Stellglied (6) aus zumindest zwei Teilen (9, 10) besteht, **dadurch gekennzeichnet, dass** der Verbindungskanal (7) vollständig im Bereich der Grenzfläche vom ersten Teil (9) zum zweiten Teil (10) angeordnet ist, und durch beide oder alle Teile (9, 10) des Stellgliedes (31, 32, 33, 34) definiert wird.

2. Weiche (1) nach Anspruch 1, **dadurch gekennzeichnet, dass** der Verbindungskanal (7) durch zumindest eine Aussparung (31, 32, 33) in einem der Teile (9, 10) des Stellgliedes (6) definiert wird.

3. Weiche (1) nach einem der Ansprüche 1 oder 2, **dadurch gekennzeichnet, dass** der Verbindungskanal (7) zumindest abschnittsweise durch Aussparungen (31, 32) in zwei angrenzenden Teilen (9, 10) des Stellgliedes (6) definiert wird.

4. Weiche (1) nach Anspruch 2, **dadurch gekennzeichnet, dass** die Aussparungen (31, 32) beider Teile (9, 10) zumindest bereichsweise spiegelsymmetrisch sind.

5. Weiche (1) nach einem der vorhergehenden Ansprüche, **dadurch gekennzeichnet, dass** die Aussparungen (31, 32, 33) sich von einer Kontaktoberfläche (29) der Teile (9, 10) in zumindest eines der Teile (9, 10) in eine Erstreckungsrichtung (30) erstrecken, wobei das lichte Maß der Aussparung von der Oberfläche in Erstreckungsrichtung (30) konstant ist oder kleiner wird.

6. Weiche (1) nach einem der vorhergehenden Ansprüche, **dadurch gekennzeichnet, dass** die Kontaktoberfläche (29) der Teile (9, 10) parallel zu der Drehachse verläuft.

7. Weiche (1), nach Anspruch 6, **dadurch gekennzeichnet, dass** sich die Drehachse (8) durch die Öffnung des Verbindungskanals (7) an seiner hinsichtlich der Eingangsseite (2) zugewandten Seite des Stellgliedes (6) erstreckt.

8. Weiche (1), nach einem der vorhergehenden Ansprüche, **dadurch gekennzeichnet, dass** sich der Verbindungskanal (7) derart durch von der hinsichtlich der Eingangsseite (2) zugewandten Seite des Stellgliedes (6) zur seiner gegenüberliegenden, der Ausgangsseite (4) zugewandten Seite des Stellgliedes (6) erstreckt, dass der Abstand des Verbindungskanals (7) zur Drehachse (8) zumindest bereichsweise zunimmt.

9. Weiche (1) nach einem der vorhergehenden Ansprüche, **dadurch gekennzeichnet, dass** das Stellglied (6) zumindest einen Druckmediumkanal (36) aufweist, der über eine Kanalmündung (37) in den Verbindungskanal (7) mündet, um ein Druckmedium in den Verbindungskanal (7) zuführen zu können.

## Claims

1. A switch (1) for a fuel, comprising an inlet opening (3) for supplying a fuel on an inlet side (2) and a plurality of outlet openings (5) for ejecting the fuel on an outlet side (4), an adjusting element (6) comprising a connection channel (7) being provided between the inlet side (2) and the outlet side (4), which adjusting element can rotate about an axis of rotation (8) and can be adjusted such that an option can be provided for connecting the inlet opening (3) to one of the outlet openings (5) via the connection channel (7), the adjusting element (6) being composed of at least two portions (9, 10), **characterized in that** the connection channel (7) is arranged completely within the region of the interface between the first portion (9) and the second portion (10) and is defined by both or all portions (9, 10) of the adjusting element (31, 32, 33, 34).

2. The switch (1) according to claim 1, **characterized in that** the connection channel (7) is defined by at least one recess (31, 32, 33) in one of the portions (9, 10) of the adjusting element (6),

3. The switch (1) according to either claim 1 or claim 2, **characterized in that** the connection channel (7) is defined, at least in sections, by recesses (31, 32) in two adjacent portions (9, 10) of the adjusting element (6).

4. The switch (1) according to claim 2, **characterized in that** the recesses (31, 32) of both portions (9, 10) are mirror-symmetrical at least in regions.

5. The switch (1) according to one of the preceding claims, **characterized in that** the recesses (31, 32, 33) extend in an extension direction (30) from a contact surface (29) of the portions (9, 10) into at least one of the portions (9, 10), the clearance of the recess from the surface in the extension direction (30) being constant or becoming smaller.

6. The switch (1) according to one of the preceding claims, **characterized in that** the contact surface (29) of the portions (9, 10) extends in parallel with the axis of rotation.

7. The switch (1) according to claim 6, **characterized in that** the axis of rotation (8) extends through the opening of the connection channel (7) on the side of the adjusting element (6) facing the inlet side (2).

8. The switch (1) according to one of the preceding claims, **characterized in that** the connection channel (7) extends from the side of the adjusting element (6) facing the inlet side (2) to the opposite side of the adjusting element (6) facing the outlet side (4) such that the distance of the connection channel (7) from the axis of rotation (8) increases at least in regions.

9. The switch (1) according to one of the preceding claims, **characterized in that** the adjusting element (6) comprises at least one pressure medium channel (36) which opens into the connection channel (7) via a channel mouth (37) in order to be able to supply a pressure medium into the connection channel (7).

## Revendications

1. Commutateur (1) pour un carburant présentant une ouverture d'entrée (3) pour fournir un carburant à un côté d'entrée (2) et plusieurs ouvertures de distribution (5) pour distribuer le carburant à un côté de sortie (4), dans lequel un actionneur (6) possédant un canal de liaison (7) est prévu entre le côté d'entrée (2) et le côté de sortie (4), lequel peut tourner autour d'un axe de rotation (8) et est réglable de telle sorte que, par l'intermédiaire du canal de liaison (7), il est possible de fournir une possibilité de raccordement de l'ouverture d'entrée (3) avec une des ouvertures de distribution (5), dans lequel l'actionneur (6) est composé d'au moins deux pièces (9, 10), **caractérisé en ce que** le canal de liaison (7) est disposé complètement au niveau de l'interface de la première pièce (9) par rapport à la deuxième pièce (10) et est défini par les deux ou par toutes les pièces (9, 10) de l'actionneur (31, 32, 33, 34).

2. Commutateur (1) selon la revendication 1, **caractérisé en ce que** le canal de liaison (7) est défini par au moins un évidement (31, 32, 33) dans l'une des pièces (9, 10) de l'actionneur (6).

3. Commutateur (1) selon l'une quelconque des revendications 1 ou 2, **caractérisé en ce que** le canal de liaison (7) est défini au moins par segments par des évidements (31, 32) dans deux pièces adjacentes (9, 10) de l'actionneur (6).

4. Commutateur (1) selon la revendication 2, **caractérisé en ce que** les évidements (31, 32) des deux pièces (9, 10) sont au moins partiellement à symétrie spéculaire,

5. Commutateur (1) selon l'une quelconque des revendications précédentes, **caractérisé en ce que** les évidements (31, 32, 33) s'étendent dans une direction d'extension (30) depuis une surface de contact (29) des parties (9, 10) dans au moins l'une des pièces (9, 10), dans lequel la dimension interne de l'évidement est constante ou diminue par rapport à la surface dans la direction d'extension (30).

6. Commutateur (1) selon l'une quelconque des revendications précédentes, **caractérisé en ce que** la surface de contact (29) des pièces (9, 10) est parallèle à l'axe de rotation.

7. Commutateur (1) selon la revendication 6, **caractérisé en ce que** l'axe de rotation (8) s'étend à travers l'ouverture du canal de liaison (7) sur son côté de l'actionneur (6) tourné au niveau du côté d'entrée (2).

8. Commutateur (1) selon l'une quelconque des revendications précédentes, **caractérise en ce que** le canal de liaison (7) s'étend de telle sorte à travers le coté tourné de l'actionneur (6) au niveau du côté d'entrée (2) vers son côté de l'actionneur (6) opposé au côté de sortie (4), que l'écart du canal de liaison (7) par rapport à l'axe de rotation (8) augmente au moins par section.

9. Commutateur (1) selon l'une quelconque des revendications précédentes, **caractérisé en ce que** l'actionneur (6) comporte au moins un canal de fluide sous pression (36), qui ouvre via une embouchure de canal (37) dans le canal de raccordement (7), pour pouvoir conduire un fluide sous pression dans le canal de liaison (7).
